# EUROPÄISCHE PATENTANMELDUNG

(11) **EP 3 708 364 A1**
(43) Veröffentlichungstag der Anmeldung: **16.09.2020**
(21) Anmeldenummer: 20161284.3
(22) Anmeldetag: 05.03.2020
(51) Int. Cl.: B32B 27/32, B32B 37/00

(54) **LEBENSMITTELKONFORMER KUNSTSTOFFBEHÄLTER**

(30) Priorität: 15.03.2019 DE 102019203507
(71) Anmelder: SHB GmbH, 74564 Crailsheim (DE)
(72) Erfinder: STOLLE, Jens-Olaf, 74564 Crailsheim (DE)
(74) Vertreter: FDST Patentanwälte

(57) **Zusammenfassung**

Der lebensmittelkonforme Kunststoff-Behälter (2) weist ein Innenvolumen (8) zur Aufnahme eines Produkts, speziell eines Körperpflegeprodukts auf. Der Behälter (2) weist dabei eine mehrschichtige Wandung (10)mit einer inneren Schicht (12) sowie mit einer äußeren Schicht (14) auf. Die Innenschicht (12) begrenzt das Innenvolumen (8). Die beiden Schichten (12,14) bestehen aus unterschiedlichen recycelten Kunststoffen. Insbesondere besteht dabei die innere Schicht (12) aus einem lebensmittelkonformen Recycling-Kunststoff, wohingegen für die äußere Schicht (14) ein minderwertiger, nicht-lebensmittelkonformer Kunststoff verwendet ist. Die innere Schicht gewährleistet, dass der Behälter insgesamt lebensmittelkonform ist.

## Beschreibung

Die Erfindung betrifft einen lebensmittelkonformen Kunststoffbehälter mit einem Innenvolumen zur Aufnahme eines Produkts.

Kunststoffbehälter, speziell Flaschen, die zur Aufnahme von Lebensmitteln oder sonstigen Produkten vorgesehen sind, die in Kontakt mit dem menschlichen Körper kommen, wie beispielsweise Körperpflegeprodukte, müssen speziellen Anforderungen genügen. Insbesondere ist für derartige Behälter eine sogenannte Konformitätserklärung für Lebensmittelbedarfsgegenstände aus Kunststoff gemäß der EU-Rahmenverordnung Nr. 1935/2004 erforderlich, insbesondere in Verbindung mit der EU-Verordnung 10/2011, die für Lebensmittelkontaktmaterialien aus Kunststoff gültig ist.

Kunststoffbehälter, die diesen EU-Verordnungen insbesondere der EU-Verordnung 10/2011 genügen, werden vorliegend als lebensmittelkonforme Kunststoff-Behälter bezeichnet.

Für derartige lebensmittelkonforme Kunststoff-Behälter verwendete Materialien dürfen keine schädigenden Substanzen beinhalten, die in das im Behälter befindliche Produkt beispielsweise durch Migration gelangen könnten.

Im Sinne einer ressourcenschonenden Verwendung von Kunststoffen ist es grundsätzlich bekannt, für Kunststoff-Gegenstände recycelten Kunststoff einzusetzen. Sofern vorliegend von recyceltem Kunststoff oder recyceltem Kunststoffmaterial gesprochen wird, so wird hierunter werkstofflich (also nicht chemisch) aufbereiteter Kunststoff verstanden. Dieser wird auch als Recyclat bezeichnet. Derartiges Material wird üblicherweise durch Sammeln von gebrauchten Kunststoffgegenständen, speziell von Verpackungsmaterial erhalten. Typischerweise wird nach einer Reinigung und nach einer Sortierung nach unterschiedlichen Kunststoffarten aus diesen Abfallprodukten durch Zerkleinern und Wiederaufschmelzen üblicherweise wieder ein Granulat aus dem recycelten Material gewonnen. Dieses wird nachfolgend wieder für eine Herstellung von Kunststoffgegenständen auf herkömmlichen Weg, beispielsweise in einem Spritzgussprozess oder einem Extrusionsprozess verwendet.

Weiterhin wird unter recyceltem Kunststoff oder recyceltem Kunststoffmaterial vorliegend verstanden, dass das erhaltene Recyclat einen Anteil aus werkstofflich wieder aufbereitetem Kunststoffmaterial von vorzugsweise mehr als 80% und vorzugsweise mehr als 90% und vorzugsweise mehr als 95% enthält. Beim Rest handelt es sich beispielsweise um Beimengungen von nicht-recycelter Neuware.

Bei der Verwendung von recyceltem Kunststoff für lebensmittelkonforme Behälter besteht jedoch das Problem, dass in diesem recycelten Material häufig Schadstoffe enthalten sind, die die Verwendung von lebensmittelkonformen Behältern ausschließt. Um dies zu vermeiden, können entsprechend hochwertige und sortenreine recycelte Kunststoffe verwendet werden, die jedoch auf dem Markt lediglich in sehr begrenzter Menge verfügbar und entsprechend teuer sind.

Ausgehend hiervon liegt der Erfindung die Aufgabe zugrunde, einen lebensmittelkonformen Behälter aus recyceltem Kunststoff anzugeben, welcher kostengünstig herstellbar ist und gleichzeitig den genannten Anforderungen gemäß den EU-Verordnungen genügt.

Die Aufgabe wird gemäß der Erfindung gelöst durch einen lebensmittelkonformen Kunststoff-Behälter, der ein Innenvolumen zur Aufnahme eines Produkts aufweist. Bei dem Produkt handelt es sich um ein Produkt, das bei seiner bestimmungsgemäßen Verwendung zumindest in Kontakt mit dem menschlichen Körper gelangt. Hierbei kann es sich um ein Lebensmittel handeln, insbesondere jedoch um ein Körperpflegeprodukt. Das Produkt kann dabei flüssig, viskos, pastös oder auch als Granulat vorliegen. Bei dem Kunststoff-Behälter handelt es sich insbesondere um eine Flasche, speziell für ein Körperpflegeprodukt, wie beispielsweise eine Waschlotion.

Der Behälter weist eine mehrschichtige Wandung auf, die eine das Innenvolumen begrenzende Innenschicht sowie eine äußere Schicht aufweist. Die beiden Schichten bestehen dabei aus unterschiedlichen, recycelten Kunststoffen.

Im Hinblick auf das Verständnis von "lebensmittelkonform" sowie "recycelte Kunststoffe" wird auf die eingangs genannten Definitionen verwiesen.

Durch die Verwendung von zwei unterschiedlichen, recycelten Kunststoffarten besteht dabei die Möglichkeit, für die innere Schicht, die in Berührung mit dem Produkt kommt, einen höherwertigen recycelten Kunststoff einzusetzen und für die äußere Schicht einen minderwertigen, besser verfügbaren recycelten Kunststoff. Insbesondere wird dadurch - trotz häufig geringer Verfügbarkeit der höherwertigen recycelten Kunststoffmaterialien - eine kostengünstige Herstellung von lebensmittelkonformen Behältern aus insbesondere 100% recyceltem Kunststoffmaterial ermöglicht. Die innere Schicht gewährleistet dabei, dass der Behälter insgesamt lebensmittelkonform ist.

In bevorzugter Ausgestaltung handelt es sich bei dem Kunststoff der inneren Schicht um einen lebensmittelkonformen und bei dem Kunststoff der äußeren Schicht um einen nicht-lebensmittelkonformen, recycelten Kunststoff. Unter einem lebensmittelkonformen Kunststoff wird dabei ein Kunststoff verstanden, der der EU-Verordnung Nr. 10/2011 genügt. Demgegenüber wird unter einem nichtlebensmittelkonformem Kunststoff ein Kunststoff verstanden, der mit Schadstoffen belastet ist, die beispielsweise dazu führen, dass dieser Kunststoff gerade nicht der genannten EU-Verordnung Nr. 1/2011 genügt.

Der Kunststoff der äußeren Schicht weist dabei insbesondere Verunreinigungen auf, die zumindest einen und vorzugsweise mehrere und insbesondere alle der nachfolgenden Stoffe aufweisen: Alkylbenzoate, Alkylbenzole, MOAH (aromatisehe Mineralölkohlenwasserstoffe typischerweise mit Kohlenstoffzahlen von C16 bis C35) sowie Kunststoffe gemäß den CAS-Nummern (chemical abstracts service) 5466-77-3 bzw. 83834-59-7 (Octinoxat), 117-81-7 (DEHP), 31570-04-4 (Irgafos 168).

Zweckdienlicherweise werden als Rohmaterial für den recycelten Kunststoff der äußeren Schicht Mischabfälle verwendet, die über das Sammelsystem des "gelben Sacks" oder vergleichbarer Sammelsysteme gesammelt sind. Hierzu zählt insbesondere auch das Sammelsystem "Plastic Heros" in den Niederlanden. Das "gelbe Sack-System" ist in Deutschland und Österreich etabliert. Insgesamt handelt es sich dabei um Verpackungsabfälle aus Kunststoff, beispielsweise ohne spezifische sortenreine Sortierung. Hierbei handelt es sich um in großen Mengen verfügbares und vergleichsweise kostengünstiges Material.

Für die innere Schicht wird demgegenüber in zweckdienlicher Ausgestaltung ein Rohmaterial aus sortenreinen Abfällen von Lebensmittelverpackungen verwendet. Es wird daher nur Rohmaterial verwendet, welches zur Verpackung und Aufbewahrung von Lebensmitteln oder sonstigen Produkten mit Kontakt zum menschlichen Körper vorgesehen war. Insofern wird also Rohmaterial verwendet, welches lebensmittelkonform ist. Speziell werden Getränkebehältnisse, die beispielsweise für die Aufnahme von Milchprodukten, Wasser, Saft verwendet wurden, als Rohmaterial verwendet. Durch die Wahl eines derartigen sortenreinen und damit lebensmittelkonformen Ausgangsmaterials ist daher bereits durch die Auswahl des Rohmaterials sichergestellt, dass auch der recycelte Kunststoff lebensmittelkonform ist. Speziell genügt das recycelte Kunststoffmaterial für die innere Schicht der sogenannten "California Proposition 65", die ähnlich den zuvor genannten EU-Verordnungen regelt, welche Stoffe enthalten sein dürfen und welche nicht.

Für beide Schichten gilt, dass sie zumindest aus 80%, vorzugsweise zumindest aus 90% und weiter vorzugsweise aus zumindest 85% aus dem genannten Rohmaterial bestehen. Der inneren Schicht ist beispielsweise ergänzend noch ein gewisser Anteil an nicht recycelter Neuware beigemischt. Der äußeren Schicht ist beispielswesie ein geringer Anteil des sortenreinen Materials der inneren Schicht beigemischt. Beim Herstellprozess für den mehrlagige Behälter fallen nämlich typischerweise Abfallstücke (Abfallbutzen etc.) an, die wiederverwertet werden und dem Produktionsprozess wieder zugeführt werden und zwar dem Rohmaterial für die zweite Schicht.

In bevorzugter Ausgestaltung weist die Wandung des Behälters eine Gesamt-Wandstärke auf, wobei die Innenschicht eine Innenwandstärke im Bereich von 30 bis 70% und vorzugsweise 40% bis 60% oder bis 50% der Gesamtwandstärke aufweist. Durch diese Maßnahme ist sichergestellt, dass in der äußeren Schicht enthaltene Schadstoffe nicht in das Innenvolumen beispielsweise durch Migration über die innere Schicht hinweg gelangen können. Untersuchungen haben gezeigt, dass mit der Wahl einer solchen Dicke eine Migration zuverlässig verhindert ist.

Diese Gesamt-Wandstärke der Wandung des Behälters liegt dabei vorzugsweise im Bereich von 0,3 bis 2 mm und insbesondere im Bereich von 0,7 bis 1,5 mm.

Weiterhin weist die äußere Schicht zweckdienlicherweise eine Außenwandstärke auf, die im Bereich von 70% bis 30% und insbesondere im Bereich von 60% bis 40% der Gesamtwandstärke liegt.

Insgesamt besteht die Wandung vorzugsweise lediglich aus der inneren Schicht und der äußeren Schicht. Es handelt sich bei der Wandung also um einen zweischichtigen Aufbau. Beispielsweise weisen beide eine gleiche Wandstärke von 50% der Gesamtwandstärke auf.

Grundsätzlich besteht auch die Möglichkeit, noch weitere Schichten vorzusehen, speziell beispielsweise eine dritte äußere Schicht, für die beispielsweise Neuware verwendet wird und die eine Dekorations-Schicht bildet. Grundsätzlich kann jedoch auf eine solche Dekorations-Schicht verzichtet werden.

Weiterhin liegen allgemein die innere Schicht sowie die äußere Schicht unmittelbar aneinander an und sind insbesondere stoffschlüssig miteinander verbunden. Zwischen den beiden Schichten ist daher insbesondere keine Sperrschicht vorgesehen, um beispielsweise die Migration zu verhindern. Die Migration wird ausschließlich durch die Wandstärke der inneren Schicht unterbunden.

Unter "stoffschlüssig verbunden" wird hierbei verstanden, dass die innere Schicht und die äußere Schicht fest miteinander verbunden sind und zwar unmittelbar aneinander haften, ohne dass zusätzlicher Klebstoff/Haftschicht etc. verwendet ist.

Dies wird herstellungstechnisch typischerweise dadurch erreicht, dass für die Herstellung ein durch ein Mehrschichtextrusionsverfahren hergestellter Schlauch verwendet wird. Dieser Schlauch weist daher bereits den mehrschichtigen, typischerweise zweischichtigen Aufbau auf, wobei allgemein durch das Extrusionsverfahren zumindest einer der beiden Kunststoffe in noch schmelzflüssiger Form auf den anderen aufgebracht wird. Hierbei erfolgt die stoffschlüssige Verbindung an der Grenzschicht zwischen den beiden Schichten. Bei dem Behälter handelt es sich dabei insbesondere um eine Blasform, wie dies für derartige Kunststoffbehälter, insbesondere Flaschen, üblich ist.

Als Material für die Innenschicht und/oder für die Außenschicht wird dabei insbesondere ein Polyethylen, speziell ein HDPE verwendet.

Bei dem Kunststoffbehälter handelt es sich insgesamt vorzugsweise um eine Flasche für ein Körperpflegeprodukt, wie eine Waschlotion, Körperlotion, Shampoo Sonnenpflegemittel etc. Die Flasche weist dabei typischerweise ein Innenvolumen im Bereich von einigen 100 ml auf, beispielsweise im Bereich von 100 bis 1.500 ml und speziell im Bereich von 200 bis 800 ml.

Ein Ausführungsbeispiel der Erfindung wird nachfolgend anhand der Figuren näher erläutert. Diese zeigen:
- Fig. 1: eine Seitenansicht einer Flasche für ein Körperpflegeprodukt sowie
- Fig. 2: eine Querschnittsdarstellung entlang der Schnittlinie II-II in Fig. 1.

In den Figuren sind gleich wirkende Teile mit den gleichen Bezugszeichen versehen.

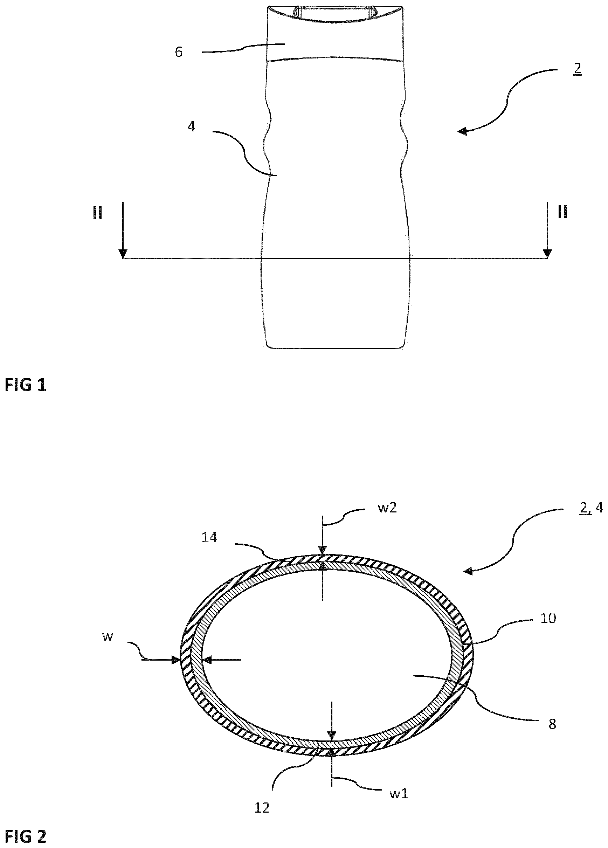

In Fig. 1 ist als Kunststoffbehälter 2 eine handelsübliche Kunststoff-Flasche dargestellt, die zur Aufnahme eines Körperpflegeprodukts vorgesehen ist. Sie weist üblicherweise einen Flaschen-Grundkörper 4 sowie eine Verschlusskappe 6 auf, die beispielsweise nach Art eines Prellverschlusses auf den Flaschen-Grundkörper 4 aufgesetzt ist.

Wie speziell anhand der Fig. 2 zu erkennen ist, umschließt der Kunststoff-Behälter 2, speziell der Flaschen-Grundkörper 4, einen Hohlraum, welcher ein Innenvolumen 8 bildet. Dieses dient der Aufnahme eines Produkts, wie beispielsweise einer Waschlotion. Das Innenvolumen 8 ist dabei von einer Wandung 10 begrenzt, welche mehrschichtig und im Ausführungsbeispiel zweischichtig aufgebaut ist. Sie umfasst eine innere Schicht 12 sowie eine äußere Schicht 14.

Die Wandung 10 weist insgesamt eine Gesamt-Wandstärke w, die innere Schicht eine Innen-Wandstärke w1 und die äußere Schicht eine Außen-Wandstärke w2 auf.

Der Kunststoff-Behälter 2 besteht vollständig aus recyceltem Kunststoffmaterial, wobei für die innere Schicht 12 und die äußere Schicht 14 unterschiedliche Recycling-Materialien verwendet sind. So wird für die innere Schicht 12 ein lebensmittelkonformer Kunststoff und für die äußere Schicht 14 ein nicht-lebensmittelkonformer Kunststoff, jeweils als recyceltes Material, verwendet. Die äußere Schicht 14 beinhaltet dabei insbesondere auch Schadstoffe. Um insgesamt einen lebensmittelkonformen Behälter gemäß der EU-Verordnung Nr. 10/2011 zu erhalten, um also eine entsprechende Konform itätserklärung für einen derartigen Behälter zu erhalten, die erst die Verwendung beispielsweise als Flasche für Körperpflegeprodukte ermöglicht, weist die innere Schicht 12 eine ausreichend dicke innere Wandstärke w1 auf. Diese liegt insbesondere im Bereich zwischen 40% bis 60% der Gesamtwandstärke w. In absoluten Zahlen ausgedrückt liegt die Innen-Wandstärke typischerweise im Bereich zwischen 0,2 bis 0,7 mm. Die Gesamtwandstärke liegt typischerweise im Bereich von 0,4 bis 1,4 mm.

Für die äußere Schicht 14 wird ein Material verwendet, welches aus recyceltem Rohmaterial hergestellt ist, welches mittels des Sammelsystems "Gelber Sack" oder vergleichbarer Sammelsysteme gesammelt wurde. Das entsprechende Rohmaterial weist daher beliebige Kunststoffprodukte, speziell Kunststoffverpackungen auf. Zumindest ein Teil der Kunststoffprodukte war nicht für Lebensmittel vorgesehen.

Demgegenüber besteht die innere Schicht 12 aus einem Material, welches aus sortenreinem Rohmaterial hergestellt ist. Unter sortenreinem Rohmaterial wird hierbei verstanden, dass dieses ausschließlich aus Abfallprodukten, insbesondere Verpackungsbehältern, gewonnen wurde, die zur Aufnahme von Lebensmitteln, speziell zur Aufnahme von Getränken vorgesehen waren, also speziell Behälter für Milch, Wasser, Säfte.

Zur Herstellung des Kunststoff-Behälters 2 speziell des Flaschen-Grundkörpers 4, wird auf bekannte Herstellungsverfahren zurückgegriffen. Hierbei wird zunächst ein Rohling bereitgestellt, welcher nach Art eines Schlauches ausgebildet ist und durch ein Mehrschicht-Extrusionsverfahren hergestellt ist. Durch dieses Verfahren erfolgt eine unmittelbare stoffschlüssige Verbindung der beiden Schichten 12, 14 miteinander, da bei diesem Verfahren die beiden Materialien noch im schmelzflüssigen Zustand aufeinander gebracht werden. Der Schlauch wird anschließend durch ein Blasformverfahren in die gewünschte Form des Flaschen-Grundkörpers 4 gebracht.

Durch den hier beschriebenen speziellen Aufbau und der speziellen Herstellungsverfahren ist ein Kunststoff-Behälter 2 bereitgestellt, welcher zu 100% aus recyceltem Material besteht, wobei gleichzeitig vorzugsweise etwa die Hälfte des Materials oder auch mehr als die Hälfte aus einem kostengünstigen, nichtlebensmittelkonformen Kunststoff-Recyclingmaterial besteht. Die Lebensmittelkonformität wird durch die innere Schicht 12 mit einer ausreichenden Wandstärke w1 sichergestellt.

### Bezugszeichenliste

- 2: Kunststoff-Behälter
- 4: Flaschen-Grundkörper
- 6: Verschlusskappe
- 8: Innenvolumen
- 10: Wandung
- 12: innere Schicht
- 14: äußere Schicht
- w: Wandstärke
- w1: innere Wandstärke
- w2: äußere Wandstärke

## Patentansprüche

1. Lebensmittelkonformer Kunststoff-Behälter (2) mit einem Innenvolumen (8) zur Aufnahme eines Produkts, insbesondere Flasche für ein Körperpflegeprodukt, wobei der Behälter eine mehrschichtige Wandung (10) mit einer das Innenvolumen (8) begrenzenden Innenschicht (12) sowie mit einer äußeren Schicht (14) aufweist, wobei die beiden Schichten (12,14) aus unterschiedlichen, recycelten Kunststoffen bestehen.

2. Kunststoff-Behälter (2) nach Anspruch 1, wobei es sich bei dem Kunststoff der inneren Schicht (12) um einen lebensmittelkonformen und bei dem Kunststoff der äußeren Schicht (14) um einen nicht-lebensmittelkonformen recycelten Kunststoff handelt.

3. Kunststoff-Behälter (2) nach einem der vorhergehenden Ansprüche, bei dem der Kunststoff der äußeren Schicht (14) nicht-lebensmittelkonforme Verunreinigungen aufweist, nämlich zumindest einen und vorzugsweise mehrere der nachfolgenden Stoffe: Alkylbenzoate, Alkylbenzole, MOAH (aromatisch Mineralölkohlenwasserstoffe), Kunststoffe gemäß den CAS-Nummern 5466-77-3 bzw. 83834-59-7 (Octinoxat), 117-81-7 (DEHP), 31570-04-4 (Irgafos 168).

4. Kunststoff-Behälter (2) nach einem der vorhergehenden Ansprüche, bei dem als Rohmaterial für den recycelten Kunststoff der äußeren Schicht (14) Mischabfälle verwendet sind, die über das Sammelsystem des "Gelben Sacks" oder vergleichbarer Sammelsysteme gesammelt sind.

5. Kunststoff-Behälter (2) nach einem der vorhergehenden Ansprüche, bei dem als Rohmaterial für den recycelten Kunststoff der inneren Schicht (12) sortenreine Abfälle von Lebensmittelverpackungen, insbesondere von Getränkebehältern verwendet sind.

6. Kunststoff-Behälter (2) nach einem der vorhergehenden Ansprüche, wobei die Wandung (12) eine Gesamt-Wandstärke (w) aufweist und die Innenschicht (12) eine Innen-Wandstärke (w1), die im Bereich von 30% bis 70% und insbesondere 40% bis 60% der Gesamtwandstärke (w) liegt.

7. Kunststoff-Behälter (2) nach dem vorhergehenden Anspruch, wobei die äußere Schicht (14) eine Außen-Wandstärke (w2) aufweist, die im Bereich von 70% bis 30% und insbesondere im Bereich von 60% bis 40% der Gesamtwandstärke liegt.

8. Kunststoff-Behälter (2) nach einem der vorhergehenden Ansprüche wobei die Wandung (10) aus der Innenschicht (12) und der Außenschicht (14) besteht.

9. Kunststoff-Behälter (2) nach einem der vorhergehenden Ansprüche, wobei die Innenschicht (12) unmittelbar an die Außenschicht (14) anschließt und stoffschlüssig mit dieser verbunden ist.

10. Kunststoff-Behälter (2) nach einem der vorhergehenden Ansprüche, bei dem die Innenschicht (12) und/oder die Außenschicht (14) aus einem HDPE bestehen.

11. Kunststoff-Behälter (2) nach einem der vorhergehenden Ansprüche, wobei der Behälter (2) durch Blasformen eines Rohlings und der Rohling durch ein Mehrschichtextrusionsverfahren hergestellt sind.

12. Kunststoff-Behälter (2) nach einem der vorhergehenden Ansprüche, bei dem es sich um eine Flasche für ein Körperpflegeprodukt handelt.
